# EUROPÄISCHE PATENTANMELDUNG

(11) **EP 1 467 068 A1**
(43) Veröffentlichungstag der Anmeldung: **13.10.2004**
(21) Anmeldenummer: 04008170.5
(22) Anmeldetag: 03.04.2004
(51) Int. Cl.: F01L 13/00, G01M 15/00, F02D 41/22, F02B 77/08, F02D 13/02

(54) **Verfahren zur Überprüfung der Funktionstüchtigkeit einer Vorrichtung zum Verstellen des Hubes der Gaswechselventile einer Brennkraftmaschine**

(30) Priorität: 12.04.2003 DE 10316898
(71) Anmelder: AUDI AG, 85045 Ingolstadt (DE)
(72) Erfinder: Feldmann, Uwe, 86673 Bergheim (DE); Wolf, Rainer, 85055 Ingolstadt (DE); Dicke, Thomas, 85049 Ingolstadt (DE); Kärsch-Kleine, Heiko, 85122 Hitzhofen (DE)

(57) **Zusammenfassung**

Der Erfindung betrifft ein Verfahren zur Überprüfung der Funktionstüchtigkeit einer Vorrichtung zum Verstellen des Hubes der Gaswechselventile einer Brennkraftmaschine mittels Auswertung der Abgaszusammensetzung, vorzugsweise einer Lambdamessung.

## Beschreibung

Die Erfindung betrifft ein Verfahren zur Überprüfung der Funktionstüchtigkeit einer Vorrichtung zum Einstellen des Hubes der Gaswechselventile einer Brennkraftmaschine gemäß dem Oberbegriff des Patentanspruchs 1.

Bei der Reduzierung des Kraftstoffverbrauchs und der Abgasemissionen einer Brennkraftmaschine kommt der Kinematik der Gaswechselventile eine besondere Bedeutung zu.

Bei einer klassisch aufgebauten Brennkraftmaschine werden die Gaswechselventile über Nocken mindestens einer Nockenwelle betätigt, die starr mit der Kurbelwelle verbunden ist. Dabei weist eine Nockenwelle bei 720 Grad Kurbelwellendrehwinkel 360 Grad Nockenwellendrehwinkel auf, wobei die Brennkraftmaschine ihr Arbeitsspiel genau einmal durchläuft.

Bei der starr mit der Kurbelwelle verbundenen Nockenwelle sind der Optimierung der Verbrennungsprozesse im Arbeitsspiel der Brennkraftmaschine enge Grenzen gesetzt.

Eine Möglichkeit zur Beeinflussung der Verbrennungsprozesse besteht in der Einstellung des Hubes der Gaswechselventile. Eine derartige Vorrichtung ist beispielsweise in der DE 100 16 103 A1 beschrieben.

Durch das Einstellen des Hubes der Gaswechselventile steht das Gaswechselventil dem Gasstrom mehr oder weniger hinderlich entgegen, wodurch das Befüllen der Brennräume mit Luft und das Entleeren der Brennräume von Verbrennungsgas maßgeblich beeinflusst wird.

Der Zündwinkel einer fremdgezündeten Brennkraftmaschine wird entsprechend dem Eingestellten Hub der Gaswechselventile variiert, wobei die Laufruhe der Brennkraftmaschine bei kleinem Hub der Gaswechselventile einen späteren Zündwinkel erfordert und bei großem Hub der Gaswechselventile einen früheren Zündwinkel erfordert.

Die Kraftstoffzuführung der Brennkraftmaschine wird ebenfalls entsprechend dem Eingestellten Hub der Gaswechselventile angepasst, wobei ein kleiner Ventilhub in der Regel eine geringere zugeführte Kraftstoffmenge benötigt, und ein großer Ventilhub in der Regel eine größere zugeführte Kraftstoffmenge erfordert.

Das korrekte Zusammenspiel zwischen der Vorrichtung zum Verstellen des Hubes der Gaswechselventile, der Kraftstoffeinspritzung und des Zündzeitpunktes ist für die Lebensdauer und die Betriebssicherheit der Brennkraftmaschine sowie zur Einhaltung von Abgasgrenzwerten eine zwingende Notwendigkeit.

Der Erfindung liegt die Aufgabe zugrunde, ein Verfahren zur Überprüfung der Funktionstüchtigkeit der Vorrichtung zum Einstellen des Hubes der Gaswechselventile einer Brennkraftmaschine gemäß dem Oberbegriff es Patentanspruchs 1 anzugeben, durch das eine zuverlässige Aussage über das Funktionieren der Vorrichtung zum Einstellen des Hubes der Gaswechselventile erzeugt wird. Dabei soll das Verfahren einfach anzuwenden und kostengünstig durchzuführen sein.

Diese Aufgabe wird erfindungsgemäß durch die Merkmale im Kennzeichen des Patentanspruchs 1 gelöst, wonach der Hub der Gaswechselventile verstellt wird, und dass anschließend die Abgaszusammensetzung ausgewertet wird.

Die Vorrichtung zur Bestimmung der Abgaszusammensetzung weist dazu einen in der Abgasanlage angeordnete Sensor auf, der vorteilhaft als Lambdasonde. ausgebildet wird.

Die Brennkraftmaschine weist eine Vorrichtung zur Kraftstoffzuführung, vorzugsweise ein Kraftstoffeinspritzung, auf. Beim Betrieb der Brennkraftmaschine sind der Hub der Gaswechselventile und die zugeführte Kraftstoffmenge streng miteinander korreliert.

Bei einem einen zu kleinen Ventilhub bewirkenden Defekt der Vorrichtung zum Einstellen des Hubes der Gaswechselventile wird dem jeweiligen Zylinder der Brennkraftmaschine zuviel Kraftstoff zugeführt. Dieses Zuviel an Kraftstoff wird bei der Auswertung der Abgaszusammensetzung als fetteres Abgasgemisch erkannt. Die Lambdamessung ergibt bei einem fetten Abgasgemisch Werte von λ < 1.

Bei einem einen zu großen Ventilhub bewirkenden Defekt der Vorrichtung zum Einstellen des Hubes der Gaswechselventile wird dem jeweiligen Zylinder der Brennkraftmaschine zuwenig Kraftstoff zugeführt. Dieses Zuwenig an Kraftstoff wird bei der Auswertung der Abgaszusammensetzung als mageres Abgasgemisch erkannt. Die Lambdamessung ergibt bei einem mageren Abgasgemisch Werte von λ > 1.

In einer vorteilhaften Weiterbildung der Erfindung ist vorgesehen, dass beim Erkennen eines Defektes an der Vorrichtung zum Einstellen des Hubes der Gaswechselventile der den Defekt verursachende Zylinder ermittelt wird. Dies ist möglich, wenn die Zündfolge der Zylinder und der Abgasstrom der Abgasanlage keine Vermischung der zylinderspezifischen Verbrennungsgase bewirken.

Beim Erkennen eines Defektes an der Vorrichtung zum Einstellen des Hubes der Gaswechselventile wird der aktuell eingestellte Hub der Gaswechselventile bestimmt. Die Brennkraftmaschine wird dann mit für diesen Hub der Gaswechselventile geeigneten Parametern, insbesondere mit der entsprechend angepassten Kraftstoffmenge und dem passenden Zündzeitpunkt, weiter betrieben.

In einer weiteren vorteilhaften Weiterbildung der Erfindung ist vorgesehen, dass der Brennkraftmaschine ein einen Fehlerspeicher aufweisendes Steuergerät zugeordnet ist. Das Erkennen eines Defektes an der Vorrichtung zum Einstellen des Hubes der Gaswechselventile wird im Fehlerspeicher abgelegt.

In einer nächsten vorteilhaften Weiterbildung der Erfindung ist vorgesehen, dass die Brennkraftmaschine in einem Kraftfahrzeug eingebaut ist. Dabei ist vorgesehen, dass ein Defekt an der Vorrichtung zum Einstellen des Hubes der Gaswechselventile an der Armaturentafel des Kraftfahrzeuges zur Anzeige gebracht wird.

In einer letzten vorteilhaften Ausgestaltung der Erfindung ist vorgesehen, dass die Überprüfung der Funktionstüchtigkeit der Vorrichtung zum Einstellen des Hubes der Gaswechselventile bei einer Betriebtemperatur aufweisenden Brennkraftmaschine durchgeführt wird.

Ein derartig ausgebildetes Verfahren zur Überprüfung der Funktionstüchtigkeit der Vorrichtung zum Verstellen des Hubes der Gaswechselventile einer fremdgezündeten Brennkraftmaschine erzeugt eine zuverlässige Aussage über das Funktionieren der Vorrichtung. Dabei werden lediglich im Fahrzeugbau übliche Komponenten verwendet, wodurch das Verfahren einfach anzuwenden und kostengünstig durchzuführen ist.

Im folgenden ist das Verfahren zur Überprüfung der Funktionstüchtigkeit einer Vorrichtung zum Einstellen des Hubes der Gaswechselventile einer Brennkraftmaschine anhand von einem Ausführungsbeispiel im Zusammenhang mit zwei Figuren dargestellt und erläutert.

Es zeigen:
- Figur 1: ein Diagramm des ein Arbeitsspiel umfassenden Signals der Lambdasonde einer sechszylindrigen Brennkraftmaschine,
- Figur 2: eine Flussdiagramm des erfindungsgemäßen Verfahrens zur Überprüfung der Funktionstüchtigkeit der Vorrichtung zum Einstellen des Hubes der Gaswechselventile.

Bei einer nach dem Ottoprinzip arbeitenden Brennkraftmaschine für ein Kraftfahrzeug mit sechs v-förmig angeordneten Zylindern weist jeder der beiden Zylinderköpfe eine Vorrichtung zum Verstellen des Hubes der Gaswechselventile auf. Die Vorrichtung ermöglicht die Einstellung entweder eines großen oder eines kleinen Ventilhubes, wobei jeder der drei Zylinder beider Zylinderköpfe der Brennkraftmaschine einzeln geschaltet werden kann.

Die Zündung des Kraftstoffes erfolgt über ein konventionelles Zündsystem, bei dem der Kraftstoff kennfeldgesteuert über Zündkerzen entzündet wird. Die Kraftstoffzuführung erfolgt über ein Kraftstoffeinspritzsystem mittels direkt in die Brennräume einspritzenden Kraftstoffinjektoren.

Die Verbrennungsgase der Brennkraftmaschine werden über eine Abgasanlage abgeführt, die eine einen Sensor aufweisende Vorrichtung zur Bestimmung der Abgaszusammensetzung aufweist. Der Sensor wird von einer Lambdasonde gebildet, die ein zum Abgasgemisch proportionales elektrisches Signal erzeugt. Die Auswertung des elektrischen Signals der Lambdasonde erfolgt in einem einen Fehlerspeicher aufweisenden Steuergerät der Brennkraftmaschine.

Die Laufruhe der Brennkraftmaschine erfordert bei einem großen Hub der Gaswechselventile einen frühen Zündzeitpunkt und bei einem kleinen Hub der Gaswechselventile einen späten Zündzeitpunkt.

Beim Betrieb der Brennkraftmaschine sind der Hub der Gaswechselventile und die zugeführte Kraftstoffmenge streng miteinander korreliert.

Durch den größeren Luftdurchsatz eines mit dem großen Ventilhub betriebenen Gaswechselventils wird bei diesem Zylinder mehr Kraftstoff eingespritzt als bei einem kleinen Ventilhub. Bei einem Defekt an der Vorrichtung zum Einstellen des Hubes der Gaswechselventile, aus dem ein zu kleiner Ventilhub resultiert, wird den Brennräumen der den Defekt aufweisenden Zylinder zuviel Kraftstoff zugeführt.

Analog folgt, dass durch den kleineren Luftdurchsatz eines mit dem kleinen Ventilhub betriebenen Gaswechselventils wird bei diesem Zylinder weniger Kraftstoff eingespritzt als bei einem großen Ventilhub. Bei einem Defekt an der Vorrichtung zum Einstellen des Hubes der Gaswechselventile, aus dem ein zu großer Ventilhub resultiert, wird den Brennräumen der den Defekt aufweisenden Zylinder zuwenig Kraftstoff zugeführt.

Während ein Zuviel an Kraftstoff durch die Lambdasonde als fetteres Abgasgemisch mit Werten von λ < 1 bestimmt wird, wird ein Zuwenig an Kraftstoff als mageres Abgasgemisch mit Werten von λ > 1 bestimmt.

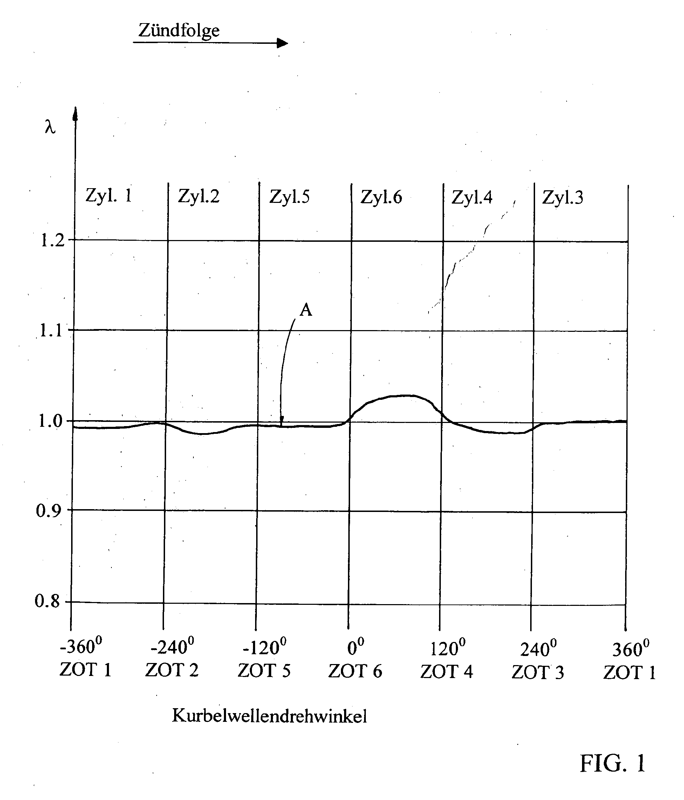

In der Figur 1 ist in einem Diagramm eine Lambdamessung dargestellt, wobei das Signal A der Lambdasonde über ein 720 Grad Kurbelwellendrehwinkel unfassendes Arbeitsspiel der Kurbelwelle der sechszylindrigen Brennkraftmaschine aufgetragen ist.

Dabei ist zu sehen, dass die Betriebstemperatur aufweisende Brennkraftmaschine bei etwa λ = 1 betrieben wird. Zudem ist dargestellt, dass der in der Zündfolge sechste Zylinder einen Wert von λ > 1 ergibt, was einem mageren Gasgemisch entspricht. Daraus folgt, das die Vorrichtung zum Verstellen des Hubes der Gaswechselventile des in der Zündfolge sechsten Zylinders defekt ist, wobei der sechste Zylinder einen zu großen Ventilhub aufweist.

An dem in der Zündfolge sechsten Zylinder wird nach dem Erkennen des einen zu großen Ventilhub bewirkenden Defektes die eingespritzte Kraftstoffmenge angehoben und der Zündzeitpunkt wird entsprechend angepasst.

Wird einem Zylinder ein Wert von λ < 1 zugeordnet, entspricht dies einem fetten Gasgemisch. Demnach weist dieser Zylinder als Defekt einen zu kleinen Ventilhub an der Vorrichtung zum Einstellen des Hubes seiner Gaswechselventile auf.

Das Erkennen eines Defektes und das Zuordnen des Defektes zu einem Zylinder erfolgt, wenn der Betrag eines Lambdawertes im Signals A der Lambdasonde einen applizierbaren Grenzwert überschreitet. Dabei sollte ein überschrittener Grenzwert periodische mit den Arbeitsspielen der Brennkraftmaschine auftreten, bis die Vorrichtung zum Verstellen des Hubes der Gaswechselventile ein weiteres mal geschaltet wird.

Die Zuordnung eines den applizierten Grenzwert überschreitenden Lambdawertes zu einem diesen Lambdawert verursachenden Zylinder erfolgt durch das Steuergerät der Brennkraftmaschine. Dem Steuergerät sind die Umgebungsgrößen, beispielsweise die Kurbelwellendrehzahl, zur Bestimmung der Zeitspanne zwischen der Zündung des Kraftstoff/Luftgemisches und dem Eintreffen des Verbrennungsgases an der Lambdasonde bekannt.

Das Erkennen des Defektes an der Vorrichtung zum Einstellen des Hubes der Gaswechselventile des sechsten Zylinders wird im Fehlerspeicher des Steuergerätes abgelegt. Zudem wird das Auftreten des Defekts an der Armaturentafel des Kraftfahrzeuges zur Anzeige gebracht.

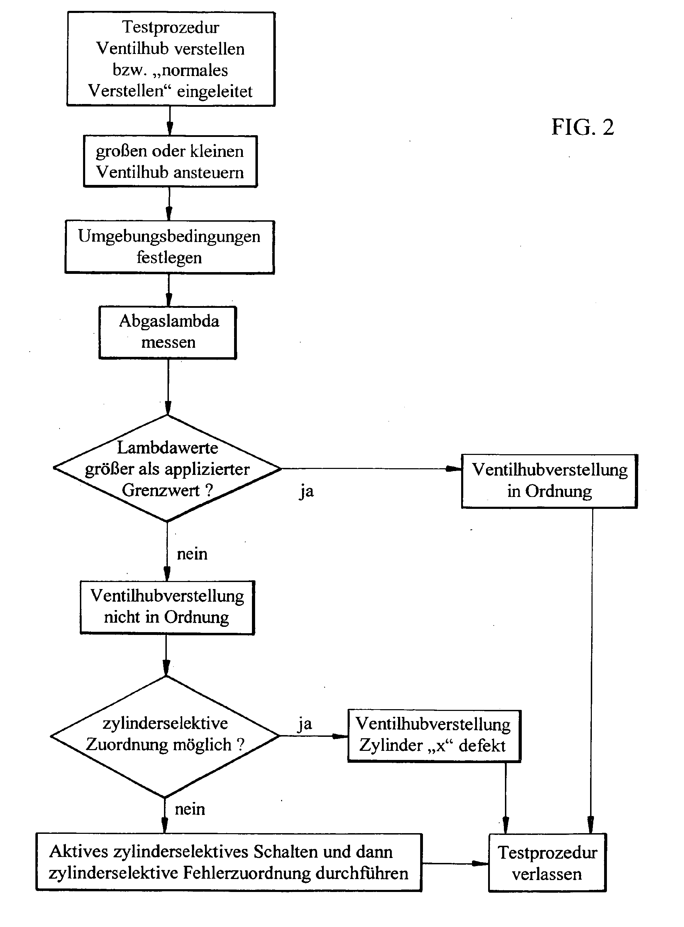

Figur 2 zeigt ein Flussdiagramm des Verfahrens zur Überprüfung der Funktionstüchtigkeit der Vorrichtung zum Einstellen des Hubes der Gaswechselventile.

Die Testprozedur kann beispielsweise bei jeder in Betriebnahme der Brennkraftmaschine bei erreichen der Betriebstemperatur gestartet werden. Grundsätzlich kann die Testprozedur auch bei jedem Schalten der Vorrichtung zum Verstellen des Hubes der Gaswechselventile durchgeführt werden.

Anschließend wird entweder ein kleiner Ventilhub oder ein großer Ventilhub an der Vorrichtung zum Einstellen des Hubes der Gaswechselventile eingestellt. Zudem werden vorteilhafte Umgebungsbedingungen festgelegt, beispielsweise bei Kraftfahrzeugen mit einem Turbolader der Druck im Ansaugtrakt der Luftzuführung der Brennkraftmaschine.

Danach wird in der Abgasanlage die Lambdamessung durchgeführt. Sind die Beträge der Lambdawerte kleiner als der applizierte Grenzwert ist die Vorrichtung zum Verstellen des Hubes der Gaswechselventile funktionstüchtig. Die Testprozedur kann in diesem Fall beendet werden.

Ist ein Betrag eines Lambdawertes größer als der applizierte Grenzwert ist die Vorrichtung zum Verstellen des Hubes der Gaswechselventile defekt.

Bei einer Vorrichtung zum Verstellen des Hubes der Gaswechselventile, bei der die Gaswechselventile jedes Zylinders einzeln geschaltet werden können, wird sodann versucht, den über dem applizierten Grenzwert auftretenden Lambdawert einem Zylinder zuzuordnen. Im dem Diagramm der Figur 1 ist das der sechste Zylinder.

Gelingt dies kann die Testprozedur verlassen werden. Gelingt dies nicht wird eine Prozedur eingeleitet, durch welche eine zylinderselektive Fehlerzuordnung möglich ist. Danach wird ebenfalls die Testprozedur verlassen.

Das Verfahren zur Überprüfung der Funktionstüchtigkeit der Vorrichtung zum Verstellen des Hubes der Gaswechselventile erzeugt eine zuverlässige Aussage über das Funktionieren der Vorrichtung, ist in einfacher Weise anzuwenden und zudem kostengünstig durchzuführen.

## Patentansprüche

1. Verfahren zur Überprüfung der Funktionstüchtigkeit einer Vorrichtung zum Einstellen des Hubes der Gaswechselventile einer Brennkraftmaschine mit einer einen Sensor aufweisenden Vorrichtung zur Bestimmung der Abgaszusammensetzung, **dadurch gekennzeichnet, dass** der Hub der Gaswechselventile verstellt wird, und dass anschließend die Abgaszusammensetzung ausgewertet wird.

2. Verfahren nach Anspruch 1, **dadurch gekennzeichnet, dass** die Brennkraftmaschine eine Vorrichtung zur Kraftstoffzuführung aufweist, und dass beim Betrieb der Brennkraftmaschine der Hub der Gaswechselventile und die zugeführte Kraftstoffmenge miteinander korreliert werden.

3. Verfahren nach Anspruch 1 oder 2, **dadurch gekennzeichnet, dass** bei einem einen zu kleinen Ventilhub bewirkenden Defekt der Vorrichtung zum Einstellen des Hubes der Gaswechselventile der Brennkraftmaschine zuviel Kraftstoff zugeführt wird, und dass das Zuviel an Kraftstoff als fetteres Abgasgemisch bestimmt wird.

4. Verfahren nach einem der Ansprüche 1 bis 3, **dadurch gekennzeichnet, dass** bei einem einen zu großen Ventilhub bewirkenden Defekt der Vorrichtung zum Einstellen des Hubes der Gaswechselventile der Brennkraftmaschine zuwenig Kraftstoff zugeführt wird, und dass das Zuwenig an Kraftstoff als mageres Abgasgemisch bestimmt wird.

5. Verfahren nach einem der Ansprüche 1 bis 4, **dadurch gekennzeichnet, dass** beim Erkennen eines Defektes an der Vorrichtung zum Einstellen des Hubes der Gaswechselventile der den Defekt verursachende Zylinder ermittelt wird.

6. Verfahren nach einem der Ansprüche 1 bis 5, **dadurch gekennzeichnet, dass** beim Erkennen eines Defektes an der Vorrichtung zum Einstellen des Hubes der Gaswechselventile der eingestellte Hub der Gaswechselventile bestimmt wird, und dass die Brennkraftmaschine mit für diesen Hub der Gaswechselventile geeigneten Parametern weiter betrieben wird.

7. Verfahren nach einem der vorangegangenen Ansprüche, **dadurch gekennzeichnet, dass** der Brennkraftmaschine ein einen Fehlerspeicher aufweisendes Steuergerät zugeordnet ist, und dass das Erkennen eines Defektes an einer Vorrichtung zum Einstellen des Hubes der Gaswechselventile im Fehlerspeicher abgelegt wird.

8. Verfahren nach einem der vorangegangenen Ansprüche, **dadurch gekennzeichnet, dass** die Brennkraftmaschine in einem Kraftfahrzeug eingebaut ist, und dass ein Defekt an einer Vorrichtung zum Einstellen des Hubes der Gaswechselventile an der Armaturentafel des Kraftfahrzeuges zur Anzeige gebracht wird.

9. Verfahren nach einem der vorangegangenen Ansprüche, **dadurch gekennzeichnet, dass** als Sensor der Vorrichtung zur Bestimmung der Abgaszusammensetzung eine Lambdasonde verwendet wird.

10. Verfahren nach einem der vorangegangenen Ansprüche, **dadurch gekennzeichnet, dass** die Überprüfung der Funktionstüchtigkeit der Vorrichtung zum Einstellen des Hubes der Gaswechselventile bei einer Betriebtemperatur aufweisenden Brennkraftmaschine durchgeführt wird.
